# EUROPÄISCHE PATENTSCHRIFT

(11) **EP 0 507 104 B1**
(45) Veröffentlichungstag und Bekanntmachung des Hinweises auf die Patenterteilung: **08.06.1994**
(21) Anmeldenummer: 92103854.3
(22) Anmeldetag: 06.03.1992
(51) Int. Cl.: F24D 3/12, F24D 3/10

(54) **Vorrichtung zur Versorgung einer Fussbodenheizung**
Apparatus for supplying under-floor heating
Appareil pour alimenter une chauffage pour le sol

(30) Priorität: 19.03.1991 DE 4108910
(43) Veröffentlichungstag der Anmeldung: 07.10.1992
(73) Patentinhaber: WILO GmbH, D-44263 Dortmund (DE)
(72) Erfinder: Radzey, Jürgen, W-5840 Schwerte (DE)
(74) Vertreter: Cohausz & Florack Patentanwälte

(56) Entgegenhaltungen:
- EP-A- 0 240 860
- DE-U- 8 903 845

## Beschreibung

Die Erfindung betrifft eine Vorrichtung zur Versorgung einer Fußbodenheizung, die mit einem Wärmeaustauscher und einer Pumpe in einem Sekundärkreislauf liegt, wobei der Wärmeaustauscher an einem Primärkreislauf angeschlossen ist, der durch einen Heizkessel führt und eine zweite Pumpe aufweist.

Es ist bekannt, eine Fußbodenheizung über einen Wärmetauscher mit einem Heizkessel zu verbinden. Hierfür sind neben dem Wärmeaustauscher zahlreiche Bauteile insbesondere Pumpen, Ventile, Anzeigevorrichtungen und Verbindungsleitungen erforderlich, die bisher in Kellerräumen oder technischen Räumen befestigt wurden und viel Platz erforderten. Die Montage war aufwendig und eine Wärmeisolierung der einzelnen Bauteile wurde entweder nicht oder unzureichend vorgenommen.

Aus der DE-U 8 903 845 ist eine Vorrichtung der eingangs genannten Art bekannt. Diese hat große Außenabmessungen und erfordert durch die Vielzahl der zu montierenden Teile einen erheblichen Arbeitsaufwand. Auch ist die Wärmedämmung ungenügend.

Aufgabe der Erfindung ist es, eine Vorrichtung der eingangs genannten Art so zu verbessern, daß bei kleinen Außenabmessungen ein geringer Montageaufwand nötig ist und bei geschützter Lage der Teile zugleich eine optimale Wärmedämmung erreicht wird.

Diese Aufgabe wird erfindungsgemäß dadurch gelöst, daß der Wärmeaustauscher und beide Pumpen in einem einzigen Gehäuse angeordnet sind, das auch die Anschlüsse für beide Kreisläufe aufweist. Der Wärmeaustauscher und beide Pumpen sind in einem einzigen Gehäuse angeordnet, das auch die Anschlüsse für beide Kreisläufe aufweist. Das Gehäuse weist zwei Schalen auf, die zumindest im Randbereich in einer senkrechten Ebene aneinanderliegen, in der die meisten Leitungen und der Wärmetauscher liegen. Die Schalen sind dickwandig ausgeführt und weisen auf den Innenseiten Ausnehmungen auf, die den Teilen der Vorrichtung nachgeformt sind und diese aufnehmen. Das Material der Schalen füllt die Zwischenräume zwischen den in der Vorrichtung befindlichen Teilen teilweise oder vollständig aus.

Hierdurch können alle Einzelteile bereits aneinander montiert sein, so daß der Einbau einer solchen Vorrichtung nur noch darin besteht, das Gehäuse an den Kreislauf der Fußbodenheizung und des Heizkessels anzuschließen. Das Gehäuse weist sehr geringe Außenabmessungen auf und kann ohne weiteres auch innerhalb einer Wohnung eingesetzt werden. Aufgrund der Vormontage ist eine hohe Zuverlässigkeit gegeben und aufgrund der Dichte der einzelnen Bauteile und des Einsatzes in ein einziges Gehäuse kann eine optimale Wärmedämmung erreicht werden. Bei optimaler Wärmedämmung ist das Innere des Gehäuses sehr gut zugänglich. Ferner ist von größtem Vorteil, daß die Schalen auch gleichzeitig als Verpackung dienen können. Die Teile liegen sicher und gut gedämmt im Gehäuse ein.

Besonders vorteilhaft ist es hierbei, wenn im Gehäuse alle erforderlichen Armaturen insbesondere Ventile, Mischer und/oder Anzeigeinstrumente angeordnet sind.

Besonders einfach und leicht ist die Anlage dann zu handhaben, wenn die im Gehäuse befindlichen Pumpen und/oder Anzeigeinstrumente die Vorderseite des Gehäuses durchdringen und von vorne ablesbar sind.

Der Herstellungsaufwand als auch der Montageaufwand werden verringert, wenn das Gehäuse aus wärmedämmendem Material insbesondere einem modifizierten Polypropylen besteht. Hierbei wird gleichzeitig auch die Wärmedämmung verbessert.

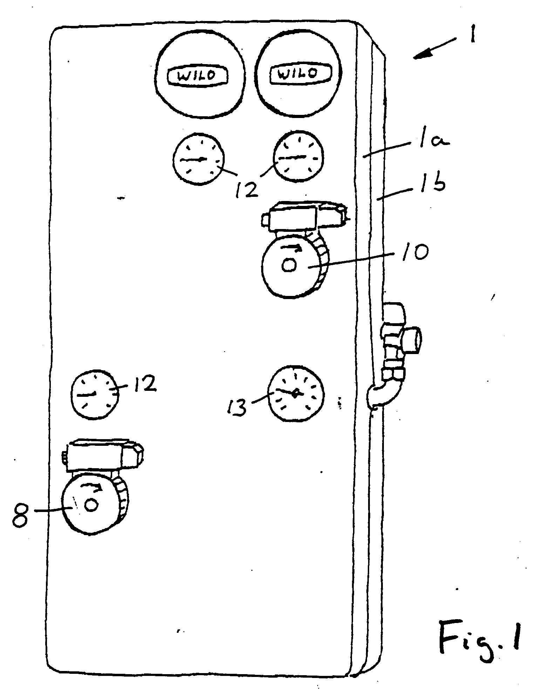

Ein Ausführungsbeispiel der Erfindung ist in den Zeichnungen dargestellt und wird im folgenden näher beschrieben. Es zeigen
- Fig. 1: eine Seitenansicht des geschlossenen Gehäuses und
- Fig. 2: eine Seitenansicht des geöffneten Gehäuses.

Das Gehäuse 1 ist außen quaderförmig und besteht aus zwei Schalen 1a,1b, die zumindest im Randbereich in einer senkrechten Ebene einander liegen. Die hintere Schale 1b kann an einer senkrechten Gebäudewand befestigt werden und enthält wie auch die vordere Schale 1a an der jeweiligen Innenseite Ausnehmungen, die den eingebauten Teilen nachgeformt sind und in denen die Teile formschlüssig einliegen.

Die Schalen 1a, 1b sind sehr dickwandig und bestehen aus einem wärmedämmenden insbesondere geschäumtem Kunststoff wie einem modifizierten Polypropylen. Bei jeder Gehäusehälfte kann das Material soweit zur anderen Hälfte bzw. zur Anlageebene hin vorstehen, daß alle Räume zwischen den eingesetzten Teilen ausgefüllt ist und dadurch ein besonders sicherer Halt und ein hoher Wärmedämmgrad erreicht wird.

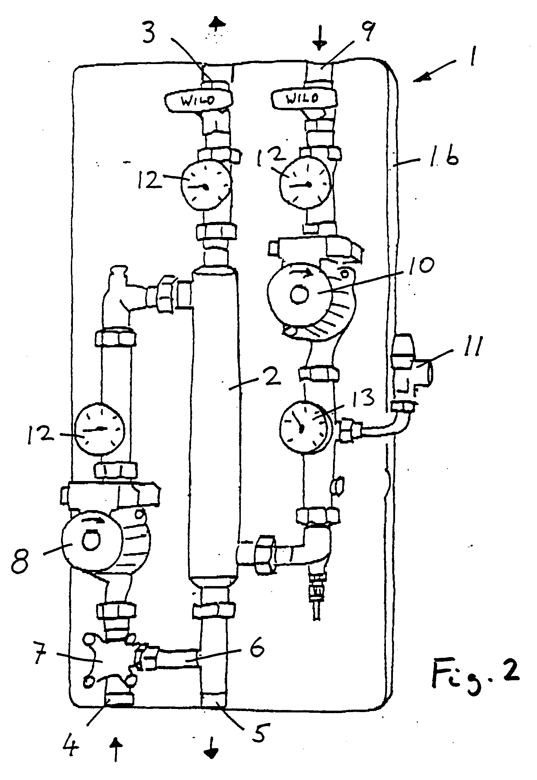

Die Fig. 2 zeigt das Gehäuse bei abgenommener vorderer Schale. Im Gehäuse sind eingesetzt ein senkrechtstehender zylindrischer Wärmetauscher 2, dessen oberes Ende koaxial angeschlossen ist an der Zuleitung 3 zur Fußbodenheizung und seitlich am Vorlauf 4 des Heizkessels. Die untere Seite ist koaxial angeschlossen am Rücklauf 5 des Heizkessels und zwischen dem Rücklauf 5 und dem Vorlauf 4 befindet sich eine Verbindungsleitung 6, die über einen Dreiwegemischer 7 das das vom Heizkessel ankommende Wasser in der Temperatur heruntersteuern kann, wenn dieses Wasser in der Temperatur zu hoch ist. Es geschieht also durch Beimischung von Wasser des Rücklaufs zum Wasser des Vorlaufs.

Im Vorlauf ist hinter dem Mischventil 7 eine Pumpe 8 eingesetzt, die das Wasser im Primärkreislauf fördert. Ferner ist an der Unterseite des Wärmeaustauschers 2 seitlich eine Leitung angeschlossen, die mit dem anderen Ende an der Rückleitung 9 der Fußbodenheizung anschließbar ist. In dieser Leitung befindet sich eine zweite Pumpe 10, um das Medium insbesondere das Wasser im Sekundärkreislauf der Fußbodenheizung zu fördern. Ferner ist an dieser Leitung ein Sicherheitsüberdruckventil 11 angeschlossen.
An den Leitungen befinden sich ferner Temperaturmeßgeräte 12 und im Sekundärkreislauf ein Druckmeßgerät 13, die durch Öffnungen in der vorderen Schale nach vorne hin hindurchreichen, um auch bei geschlossenem Gehäuse abgelesen werden zu können. Ferner befinden sich in der vorderen Schale auch Öffnungen für die Stirnseiten der Pumpen 8,10 bzw. deren elektrischen Antriebsmotoren, der Achsen waagerecht und senkrecht zur Vorderseite der vorderen Schale 1a liegen.

Da die innerhalb des Gehäuses 1 befindlichen Anschlußleitungen und Teilleitungen des Primär- und Sekundärkreislaufes zueinander und zum Wärmeaustauscher 2 parallel und insbesondere senkrecht liegen, können alle diese Teile sehr nahe aneinander gerückt sein, so daß sie sehr wenig Platz innerhalb des Gehäuses benötigen. Damit können die Außenabmessungen des Gehäuses 1 sehr klein sein. Auch ist es von großem Vorteil, daß die Anschlüsse zur Fußbodenheizung an einer Seite des Gehäuses insbesondere an der Oberseite und die Anschlüsse zum Heizkessel an der anderen insbesondere gegenüber liegenden und damit insbesondere an der Unterseite des Gehäuses angeordnet sind.

## Patentansprüche

1. Vorrichtung zur Versorgung einer Fußbodenheizung, die mit einem Wärmeaustauscher (2) und einer Pumpe (10) in einem Sekundärkreislauf liegt, wobei der Wärmeaustauscher (2) an einem Primärkreislauf angeschlossen ist, der durch einen Heizkessel führt und eine zweite Pumpe (8) aufweist, **dadurch gekennzeichnet**,
- daß der Wärmeaustauscher (2) und beide Pumpen (8,10) in einem einzigen Gehäuse (1) angeordnet sind, das auch die Anschlüsse für beide Kreisläufe aufweist.
- daß das Gehäuse (1) zwei Schalen (1a,1b) aufweist, die zumindest im Randbereich in einer senkrechten Ebene aneinanderliegen, in der die meisten Leitungen und der Wärmetauscher (2) liegen.
- daß die Schalen (1a,1b) dickwandig ausgeführt sind und auf den Innenseiten Ausnehmungen aufweisen, die den Teilen der Vorrichtung nachgeformt sind und diese aufnehmen.
- daß das Material der Schalen (1a,1b) die Zwischenräume zwischen den in der Vorrichtung befindlichen Teilen teilweise oder vollständig ausfüllen.

2. Vorrichtung nach Anspruch 1, **dadurch gekennzeichnet**, daß im Gehäuse (1) alle erforderlichen Armaturen insbesondere Ventile (11), Mischer (7) und/oder Anzeigeinstrumente (12,13) angeordnet sind.

3. Vorrichtung nach einem der vorherigen Ansprüche, **dadurch gekennzeichnet**, daß die im Gehäuse (1) befindlichen Pumpen (8,10) und/oder Anzeigeinstrumente (12,13) die Vorderseite des Gehäuses (1) durchdringen und von vorne ablesbar sind.

4. Vorrichtung nach einem der vorherigen Ansprüche, **dadurch gekennzeichnet**, daß das Gehäuse (1) aus wärmedämmendem Material insbesondere einem modifiziertem Polypropylen besteht.

## Claims

1. An apparatus for supplying underfloor heating, which is disposed with a heat exchanger (2) and a pump (10) in a secondary circuit, the heat exchanger (2) being connected to a primary circuit, which extends through a heating boiler and has a second pump (8), characterized in that
- the heat exchanger (2) and the two pumps (8, 10) are disposed in a single casing (1) which also has the connections for the two circuits;
- the casing (1) has two shells (1a, 1b) which at least in the edge zone lie against one another in a vertical plane in which the majority of lines and the heat exchanger (2) are disposed;
- the shells (1a, 1b) are constructed with thick walls and are formed on their insides with recesses which are shaped to match the parts of the apparatus and receive such parts;
- the material of the shells (1a, 1b) partially or completely fill the gaps between the parts disposed in the apparatus.

2. An apparatus according to claim 1, characterized in that all the necessary fittings, more particularly valves (11), mixer (7) and/or indicating instruments (12, 13) are disposed in the casing (1).

3. An apparatus according to one of the preceding claims, characterized in that the pumps (8, 10) and/or indicating instruments (12, 13) disposed in the casing (1) extend through the front side of the casing (1) and can be read off from the front.

4. An apparatus according to one of the preceding claims, characterized in that the casing (1) is made of a heat-insulating material, more particularly a modified polypropylene.

## Revendications

1. Dispositif pour l'alimentation d'un chauffage par le sol, qui se trouve dans un circuit secondaire avec un échangeur de chaleur (2) et une pompe (10), l'échangeur de chaleur (2) étant raccordé à un circuit primaire qui conduit à travers une chaudière de chauffage et présente une seconde pompe (8),
caractérisé en ce
- que l'échangeur de chaleur (2) et les deux pompes (8, 10) sont disposées dans un carter unique (1) qui présente également les raccordements pour les deux circuits,
- que le carter (1) présente deux coques (1a, 1b) qui sont en appui l'une sur l'autre dans un plan vertical au moins dans la région de bord, dans lesquelles se trouvent la plupart des conduites et l'échangeur de chaleur (2),
- que les coques (1a, 1b) sont réalisées à paroi épaisse et présentent sur les faces internes des évidements qui sont conformés aux pièces du dispositif et les reçoivent,
- que le matériau des coques (1a, 1b) remplit partiellement ou totalement les volumes intermédiaires entre les pièces se trouvant dans le dispositif.

2. Dispositif selon la revendication 1,
caractérisé en ce que toutes les armatures nécessaires, en particulier valves (11), mélangeur (7) et/ou instruments indicateurs sont disposés à l'intérieur du carter (1).

3. Dispositif selon l'une des revendications précédentes,
caractérisé en ce que les pompes (8, 10) et/ou instruments indicateurs (12, 13) se trouvant dans le carter (1) traversent la face avant du carter (1) et sont lisibles depuis l'avant.

4. Dispositif selon l'une des revendications précédentes,
caractérisé en ce que le carter (1) est constitué d'un matériau calorifuge, en particulier un polypropylène modifié.
